# EUROPÄISCHE PATENTSCHRIFT

(11) **EP 2 165 350 B1**
(45) Veröffentlichungstag und Bekanntmachung des Hinweises auf die Patenterteilung: **16.01.2013**
(21) Anmeldenummer: 08774919.8
(22) Anmeldetag: 09.07.2008
(51) Int. Cl.: H01J 61/48, C09K 11/59, C09K 11/78, C09K 11/80

(54) **LEUCHTSTOFFMISCHUNG FÜR EINE ENTLADUNGSLAMPE UND ENTLADUNGSLAMPE, INSBESONDERE HG-NIEDERDRUCKENTLADUNGSLAMPE**
ILLUMINANT MIXTURE FOR A DISCHARGE LAMP AND DISCHARGE LAMP, IN PARTICULAR AN Hg LOW-PRESSURE DISCHARGE LAMP
MÉLANGE LUMINESCENT POUR LAMPE À DÉCHARGE ET LAMPE À DÉCHARGE APPROPRIÉE, NOTAMMENT LAMPE À DÉCHARGE À VAPEUR DE MERCURE (HG) BASSE PRESSION

(30) Priorität: 16.07.2007 DE 102007033029
(43) Veröffentlichungstag der Anmeldung: 24.03.2010
(73) Patentinhaber: OSRAM GmbH, 81543 München (DE)
(72) Erfinder: JERMANN, Frank, 86343 Königsbrunn (DE); KONRAD, Armin, 86845 Grossaitingen (DE); ZACHAU, Martin, 82269 Geltendorf (DE)
(86) Internationale Anmeldenummer: PCT/EP2008/058913
(87) Internationale Veröffentlichungsnummer: WO 2009/010433

(56) Entgegenhaltungen:
- EP-A- 1 428 863
- WO-A-2007/054875
- US-A1- 2004 095 058

## Beschreibung

### Technisches Gebiet

Die Erfindung betrifft eine Leuchtstoffmischung für eine Entladungslampe, wobei die Leuchtstoffmischung eine erste und eine zweite Leuchtstoffverbindung aufweist. Des Weiteren betrifft die Erfindung eine Entladungslampe mit einer derartigen Leuchtstoffmischung.

### Stand der Technik

Für die Beschichtung von Hg-Niederdruckentladungslampen werden in der Regel ein blauer, ein roter und ein grüner Leuchtstoff zur Strahlungskonversion verwendet, um im Bereich der Juddschen Geraden Farbtemperaturen größer 2500 K beispielsweise innerhalb der standardisierten IEC-Farbortoleranzbereiche zu realisieren. Die bekannten üblicherweise eingesetzten Leuchtstoffe (BAM, CAT, YOE) konvertieren dabei zum Großteil die durch die Hg-Niederdruckentladung erzeugte Strahlung mit den Wellenlängen 185 nm und 254 nm in sichtbares Licht, wobei der durch die Hg-Entladung zusätzlich im sichtbaren emittierte Strahlungsanteil, beispielsweise bei 435 nm, dabei nicht oder durch die eingesetzten Leuchtstoffe nur geringfügig absorbiert wird.

Folglich ist dem Leuchtstoffspektrum ein zusätzliches bläuliches Hg-Vis-Spektrum überlagert. Dies führt dazu, dass nicht alle Farborte des Farbdreiecks, welches durch die im UV (Ultraviolett)-Bereich (Wellenlängen kleiner 254 nm) angeregten Leuchtstoffe aufgespannt wird, erreicht werden können. Vielmehr ist das erreichbare Farbdreieck verkleinert und die Eckpunkte in Richtung des Hg-Vis-Farbortes verschoben. Die Stärke der Verschiebung hängt dabei von dem relativen Strahlungsanteil der Hg-Vis-Strahlung zur Leuchtstoffstrahlung ab, wobei der Hg-Vis-Anteil mit zunehmenden Entladungsstrom und zunehmender Stromdichte im Entladungsgefäß der Lampe zunimmt. Folglich können durch den hohen Hg-Vis-Anteil bei hochbelastete Lampen Farbtemperaturen von 2700 K innerhalb des IEC-Toleranzbereichs allein durch die Mischung eines grün und eines rot emittierenden Leuchtstoffes nicht mehr erreicht werden. Darüber hinaus sind Farbtemperaturen kleiner 2500 K im Bereich der Juddschen Geraden mit den heutigen Leuchtstoffen nicht erreichbar.

Bei herkömmlichen Lampen wird für die Absorption der bläulichen Hg-Strahlung ein Filterschlauch an der Außenseite des Lampenkolbens eingesetzt, welcher mit Farbstoffen oder Pigmenten versehen ist. Des Weiteren können Filterschichten innerhalb des Entladungsgefäßes vorgesehen sein, die zwischen der Innenseite des Lampenkolbens und der Leuchtstoffschicht angebracht sind. Weiterhin können farbige, beispielsweise pigmentierte, Entladungsgefäße vorgesehen sein.

Des Weiteren können für die Absorption, Strahlungskonversion und Emission des Strahlungsanteils in den längerwelligen Spektralbereich als Bestandteil einer Beschichtung außerhalb des Entladungsgefäßes, beispielsweise in einem Schlauchmaterial, oder innerhalb des Entladungsgefäßes zwischen Entladungsgefäß und Leuchtstoffbeschichtung beispielsweise ein in einem gelben Spektralbereich emittierender Leuchtstoff L175, Y3A15012:Ce, Tb eingesetzt werden. Ein Einsatz dieses Leuchtstoffes in der Leuchtstoffschicht ist wegen der geringen Anregbarkeit im UV-Bereich jedoch weniger bevorzugt.

Aus der WO 2007/054875 A1 ist eine Entladungslampe bekannt, welche ein Entladungsgefäß mit einer Leuchtstoffschicht aufweist. Die Leuchtstoffschicht umfasst ein Gemisch, welches zumindest aus rot und grün lumineszierenden Materialien besteht. Das rot lumineszierende Material umfasst (Y,Gd)₂O₃:Eu, während das grün lumineszierende Material (Ba,Ca,Sr)₂SiO₄:Eu und/oder (Sr,Ca,Ba,Mg,Zn)Si₂N₂O₂:Eu umfasst, wobei diese Partikel mit einer Beschichtung als Al₂O₃ beschichtet sind.

Die US 2004/0095058 A1 offenbart eine Anzeigeeinrichtung, die als Plasma-Display oder als Leuchtstofflampe ausgebildet sein kann. Als Leuchtverbindung mit einem Emissionsspektrum im roten Spektralbereich wird beispielsweise Y₂O₃:Eu (YOE) verwendet. Als grün emittierende Leuchtstoffverbindung wird die Verbindung (Ce,Tb)MgAl₁₁O₁₉:Ce,Tb (CAT) vorgeschlagen.

Aus der EP 1 428 863 A1 ist eine Leuchtstofflampe mit einem Leuchtstoffgemisch aus mindestens vier Leuchtstoffen zu entnehmen. Das Leuchtstoffgemisch umfasst einen blauen Leuchtstoff mit einem Emissionsmaximum bei 440-490 nm, einen blau-grünen Leuchtstoff mit einem Emissionsmaximum bei 475-525 nm, einen grünen Leuchtstoff mit einem Emissionsmaximum bei 515-550 nm, einen orangen Leuchtstoff mit einem Emissionsmaximum von 550-600 nm, einen roten Leuchtstoff mit einem Emissionsmaximum bei 615-665 nm und einen roten Leuchtstoff, der ein Emissionsmaximum bei 600-670 nm aufweist.

### Darstellung der Erfindung

Es ist Aufgabe der vorliegenden Erfindung, eine Leuchtstoffmischung für eine Entladungslampe sowie eine Entladungslampe zu schaffen, mit welcher geringere Farbtemperaturen idealerweise im Bereich der Juddschen Geraden bei gleichzeitig höherer Lichtausbeute erzielt werden können.

Diese Aufgabe wird durch eine Leuchtstoffmischung, welche die Merkmale nach Anspruch 1 aufweist, und eine Entladungslampe, welche die Merkmale nach Anspruch 6 aufweist, gelöst.

Eine erfindungsgemäße Leuchtstoffmischung für eine Entladungslampe weist eine erste und zumindest eine zweite Leuchtstoffverbindung auf. Unter einer Leuchtstoffverbindung wird insbesondere eine Verbindung von Atomen verstanden, welche ein Leuchtstoffkorn bilden.

Die erste Leuchtstoffverbindung der Leuchtstoffmischung weist ein Emissionsspektrum im grünen bis gelben Spektralbereich auf und ist zur Absorption der von einer Hg-Quelle emittierten UV (Ultraviolett)-Strahlung und der von der Hg-Quelle emittierten Strahlung im blauen Spektralbereich ausgebildet. Durch diese Ausgestaltung der Leuchtstoffmischung können geringere Farbtemperaturen aufgrund der Absorption der bläulichen Hg-Strahlung erreicht werden. Des Weiteren kann eine höhere Lichtausbeute aufgrund der Absorption der Hg-Strahlung und einer längerwelligen Emission dieser gewährleistet werden. Durch die Eigenschaft der Leuchtstoffmischung, insbesondere der ersten Leuchtstoffverbindung, sowohl die UV-Strahlung als auch die im blauen Spektralbereich angesiedelte Strahlung der Hg-Quelle absorbieren und konvertieren zu können, können auch im Vergleich zum Stand der Technik niedere Farbtemperaturen idealerweise im Bereich der Juddschen Geraden realisiert werden.

Die erste Leuchtstoffverbindung der Leuchtstoffmischung weist ein Orthosilikat der Formel (Ba, Sr, Ca)2SiO4:Eu auf. Ein derartiger Bestandteil einer Leuchtstoffverbindung ermöglicht besonders vorteilhaft die Realisierung der vorab genannten Kriterien im Hinblick auf eine sehr starke, eine starke und eine schwache Absorption.

Alternativ weist die erste Leuchtstoffverbindung als Bestandteil (Sr_{1-x-y}BaₓCa_{y})Si₂O₂N₂:Eu auf, welches im Folgenden kurz als SrSiON bezeichnet ist. Auch durch diese spezifische Bestandteilgestaltung der ersten Leuchtstoffverbindung können die Kriterien im Hinblick auf die oben genannte sehr starke, starke und schwache Absorption in den entsprechenden Wellenlängenbereichen besonders vorteilhaft erreicht werden.

Es ist vorgesehen, dass die zweite Leuchtstoffverbindung ein Emissionsspektrum im roten Spektralbereich aufweist. Die zweite Leuchtstoffmischung weist als Bestandteil Y203:Eu auf. Auch die zweite Leuchtstoffverbindung ist somit mit Eu dotiert, so dass die gesamte Leuchtstoffmischung Eu dotiert ist und alle Leuchtstoffverbindungen der Leuchtstoffmischung Eu dotiert sind.

Die dominierende Wellenlänge des Lampenemissionsspektrums der gesamten Leuchtstoffmischung ist für Farbtemperaturen kleiner 2750K größer als 575nm.

Vorzugsweise ist die dominierende Wellenlänge des Emissionsspektrums der gesamten Leuchtstoffmischung größer 600 nm.

Bei Messungen der dominierenden Wellenlänge (lambda_dom) von Lampenmustern hat sich ergeben, dass die Daten (Messpunkte) für Kompaktleuchtstofflampen (CFL) und die für Stablampen (FL) sehr gut übereinstimmen.

Das durch die Leuchtstoffmischung erzeugte Lampenemissionsspektrum erzielt dominierende Wellenlängen in folgenden Bereichen:

Vorzugsweise ist die dominierende Wellenlänge des Lampenemissionsspektrums der gesamten Leuchtstoffmischung für Farbtemperaturen kleiner 2000K größer als 585nm, für Farbtemperaturen kleiner 1750K größer als 590 und für solche kleiner als 1250K größer als 600nm.

Die dominierende Wellenlänge wird dabei im CIE 1931 xy-Farbdiagramm bestimmt. Sie entspricht der Wellenlänge des Spektralfarbenzuges (Randkurve des Farbdiagramms) an dem sich die Gerade durch den Weißpunkt bei x = 0.313 und y = 0.337 und dem gemessenen Farbort x, y der Leuchtstoffmischung mit dem Spektralfarbenzug schneidet.

Erfindungsgemäß ist die Leuchtstoffmischung so ausgebildet, dass abhängig von einem einstellbaren Massenverhältnis zwischen der ersten und der zweiten Leuchtstoffverbindung die Farbtemperatur der emittierten Strahlung einstellbar ist. Der Massenanteil der ersten Leuchtstoffverbindung ist kleiner oder gleich 50 %. Die Leuchtstoffverbindung ist so ausgebildet, dass Farbtemperaturen kleiner 2500 K einstellbar sind. Dies kann erfindungsgemäß durch das Einstellen der Massenverhältnisse zwischen den zumindest zwei Leuchtstoffverbindungen realisiert werden. Durch diese Ausgestaltung der Leuchtstoffmischung lassen sich somit relativ kleine Farbtemperaturen bei dennoch erhöhter Lichtausbeute realisieren.

Vorzugsweise weist die erste Leuchtstoffverbindung für Strahlung mit Wellenlängen kleiner 440 nm eine starke Absorption auf. Dabei bedeutet eine starke Absorption, dass die Reflexion einer gepressten Pulvertablette in 45°/0°-Geometrie gemessen relativ zu einem A1203-Standard weniger 60 % beträgt.

Vorzugsweise weist die erste Leuchtstoffverbindung für Strahlung einer Wellenlänge kleiner 254 nm eine sehr starke Absorption auf. Dabei bedeutet eine sehr starke Absorption, dass die Reflexion einer gepressten Pulvertablette in 45°/0°-Geometrie gemessen relativ zu einem A1203-Standard weniger als 40 % beträgt.

Insbesondere ist die Leuchtstoffmischung auch so ausgebildet, dass die erste Leuchtstoffverbindung für Strahlung mit einer Wellenlänge größer 530 nm eine schwache Absorption aufweist. Damit bedeutet eine schwache Absorption, dass die Reflexion einer gepressten Pulvertablette in 45°/0°-Geometrie gemessen relativ zu einem A1203-Standard mehr als 90 % beträgt.

Das Emissionsspektrum der ersten Leuchtstoffverbindung ist vorzugsweise so gestaltet, dass es eine dominierende Wellenlänge zwischen 530 nm und 570 nm aufweist. Insbesondere ist vorgesehen, dass die Halbwertsbreite der Emissionsbande der ersten Leuchtstoffverbindung kleiner 100 nm ist.

Die erste Leuchtstoffverbindung der Leuchtstoffmischung ist mit Eu (Europium) dotiert. Der Gewichtsanteil der Dotierung mit Eu beträgt vorzugsweise zwischen 0,1 % und 15 %. Insbesondere beträgt dieser Dotierungsanteil zwischen 0,2 % und 2 %. Besonders vorteilhaft erweist sich eine Dotierung mit Eu zwischen 1 % und 2 %. Insbesondere ist dies dann bevorzugt vorgesehen, wenn die erste Leuchtstoffverbindung als SrSiON:Eu aufgebaut ist.

Durch die Leuchtstoffverbindungen(Ba, Sr, Ca)2SiO4:Eu oder SrSiON:Eu wird ermöglicht, dass die UV-Hg-Strahlung und auch die bläuliche Hg-Vis-Strahlung absorbiert werden können, wobei die spezifisch genannten Leuchtstoffverbindungen ein Emissionsspektrum im grünen bis gelben Spektralbereich aufweisen. Zudem zeichnen sich diese genannten Leuchtstoffverbindungen durch eine hohe Anregbarkeit und Effizienz im UV-Spektralbereich sowie im blauen Spektralbereich aus. Darüber hinaus werden die genannten Hg-Strahlungsanteile durch diese spezifischen Leuchtstoffverbindungen nicht nur zum Großteil absorbiert sondern auch zum großen Teil in sichtbare Strahlung konvertiert.

Insbesondere durch Kombination einer der oben genannten vorteilhaften ersten Leuchtstoffverbindungen mit einer im roten Spektralbereich emittierenden zweiten Leuchtstoffverbindung, nämlich Y2O3:Eu, lassen sich damit besonders vorteilhaft Farbtemperaturen kleiner 2500 K mit hoher Effizienz erzielen.

Es kann vorgesehen sein, dass die erfindungsgemäße Leuchtstoffmischung und/oder zumindest eine der vorteilhaften Ausführungen ausschließlich aus den jeweils genannten Zusammensetzungen besteht und somit keine weiteren chemischen Bestandteile umfasst. Es kann jedoch auch vorgesehen sein, dass dies keine abschließende Komponentenangabe ist, sondern dass die erfindungsgemäße Leuchtstoffmischung und/oder eine vorteilhafte Ausführung davon darüber hinaus auch weitere chemische Bestandteile, insbesondere weitere Leuchtstoffe, umfassen kann.

Es soll explizit erwähnt werden, dass alle für die Leuchtstoffmischung und die Leuchtstoffverbindungen angegebenen chemischen Formeln als Idealformeln bezeichnet sind, dass jedoch auch alle über diese Idealformeln hinausgehenden Verbindungen mit (geringfügigen) Abweichungen in der Stöchiometrie explizit von der Erfindung mit umfasst sind. Dies gilt im Besonderen für Abweichungen bei denen die Kristallstruktur gleich bleibt und die Abweichungen in Emissions- und Absorptionsspektren sich in der Peaklage um weniger als 1%, und in der Peakbreite um weniger als 5% unterscheiden.

Als Idealformeln für einige weitere Leuchtstoffe seien nachfolgende Angabe angefügt:

CAT bezeichnet (Ce,Tb)MgAl11019; LAP bezeichnet (La,Ce,Tb)P04; BAM bezeichnet (Ba,Eu)MgAl10017; BAMMn bezeichnet (Ba,Eu)(Mg,Mn)Al10017; CBT bezeichnet (Gd,Ce,Tb)(Mg,Zn,Mn)B5010; SCAP bezeichnet (Sr,Ba,Ca,Mg,Eu)5(PO4)3(F,Cl); SCAPMn bezeichnet (Sr,Ba,Ca,Mg,Eu,Mn)5(PO4)3(F,Cl); Zinksilikat bezeichnet (Zn,Mg,Mn)2Si04; YOE bezeichnet Y203:Eu.

Ein weiterer Aspekt der Erfindung betrifft eine Entladungslampe mit einem Entladungsgefäß, an dem eine Leuchtstoffschicht ausgebildet ist. Es ist zumindest eine erste Leuchtstoffschicht an dem Entladungsgefäß ausgebildet, welche eine erfindungsgemäße Leuchtstoffmischung oder eine vorteilhafte Ausgestaltung davon aufweist.

Vorzugsweise ist die erste Leuchtstoffschicht an der Innenseite des Entladungsgefäßes unmittelbar ausgebildet. Es kann auch vorgesehen sein, dass zwischen der ersten Leuchtstoffschicht und der Innenseite des Entladungsgefäßes zumindest eine Hg-Diffusions-Schutzschicht ausgebildet ist. Beispielsweise kann vorgesehen sein, dass zwischen der Innenseite des Entladungsgefäßes und einer ersten Leuchtstoffschicht, welche als erste Leuchtstoffverbindung SrSiON:Eu aufweist eine derartige Schutzschicht ausgebildet ist. Diese spezifische Schutzschicht kann die Funktion gegenüber einer zu vermeidenden Hg-Diffusion in das Glas des Entladungsgefäßes wahrnehmen.

Vorzugsweise ist auf der der Innenseite des Entladungsgefäßes abgewandten Oberseite der ersten Leuchtstoffschicht eine Schutzschicht zum Schutz der ersten Leuchtstoffverbindung vor VUV-Strahlung und/oder einer Reaktion mit Hg-Ionen ausgebildet. Diese Schutzschicht zum Schutz vor VUV-Strahlung und/oder einer Reaktion der Leuchtstoffverbindung mit Hg-Ionen kann beispielsweise als Bestandteil A1203 und/oder Y203 aufweisen. Diese Strahlungsschädigungs-Schutzschicht kann auch direkt auf die einzelnen Leuchtstoffverbindungen der Leuchtstoffschicht aufgebracht sein oder diese umgeben. Als VUV-Strahlung wird dabei Strahlung mit einer Wellenlänge kleiner 200nm bezeichnet.

Es kann auch vorgesehen sein, dass auf der der Innenseite des Entladungsgefäßes abgewandten Oberseite der ersten Leuchtstoffschicht eine zweite Leuchtstoffschicht ausgebildet ist, welche Tb (Terbium) aufweist. Da die erste Leuchtstoffschicht Tb-frei ausgebildet ist und die zweite Leuchtstoffschicht Tb-haltig ausgebildet ist, sind diese beiden Leuchtstoffschichten allein schon aufgrund dieser Abweichung in dem genannten Element als unterschiedliche Schichten konzipiert.

Vorzugsweise weist diese zweite Leuchtstoffschicht eine CAT-YOE-Mischung von Leuchtstoffen auf. CAT bezeichnet dabei eine chemische Verbindung die im Wesentlichen durch CeMgAl11019. Tb, YOE im Wesentlichen durch Y2O3:Eu beschrieben wird. Neben CAT kann als alternativer Grünleuchtstoff LAP und/oder CBT und/oder Zinksilikat vorgesehen sein.

Vorzugsweise sind die ersten Leuchtstoffverbindungen der ersten Leuchtstoffschicht von einer Schutzschicht umgeben. Die Materialkomponenten der Schutzschicht sind vorzugsweise unterschiedlich zu den ersten Leuchtstoffverbindungen.

Es kann vorgesehen sein, dass die die ersten Leuchtstoffverbindungen umgebende Schutzschicht Metalloxide aufweist. Diese können beispielsweise Al2O3, Y2O3 oder aber auch Si02 sein. Ebenso kann vorgesehen sein, dass die die ersten Leuchtstoffverbindungen umgebende Schutzschicht Borate und/oder Phosphate aufweist. Es kann auch vorgesehen sein, dass die die ersten Leuchtstoffverbindungen umgebende Schutzschicht ternäre Materialien wie beispielsweise Aluminiumborate und Aluminiumphosphate umfasst. Generell sind Metalloxide oder ein Material mit positiver Oberflächenladung in Wasser vorzuziehen, da sie tendenziell die Hg-Adsorption verringern. Besonders gut geeignet sind daher A1203 und Y203. Andererseits lassen sich Schutzschichten für die ersten Leuchtstoffverbindungen auch aus Si02 herstellen, wobei diese Verbindungen besonders dicht, dünn und preiswert als Schutzschichten hergestellt werden können, und zu einer Verbesserung der Strahlungsstabilität und der Wasserstabilität beitragen, so dass sie trotz niedrigerer Oberflächenladung und tendenziell höherer Hg-Adsorption verwendet werden können.

Es kann auch vorgesehen sein, dass diese Schutzschicht Fluoride aufweist.

Durch dieses so genannte Coating der ersten Leuchtstoffverbindung bzw. der Leuchtstoffkörner der Leuchtstoffmischung kann die Verwendung in Leuchtstoff- und Kompaktleuchtstofflampen im Hinblick auf die Stabilität gegenüber anregender Strahlung, im Hinblick auf eine geringe Affinität gegenüber Hg und damit eine geringe Adsorption von Hg während des Lampenbetriebes, und im Hinblick auf die Stabilität in Wasser, damit die heute üblichen, umweltfreundlichen Beschichtungsverfahren, bei denen Wasser-basierte Suspension eingesetzt wird, verwendet werden können, einen positiven Beitrag leisten. Diese die Leuchtstoffkörner bzw. die ersten Leuchtstoffverbindungen umgebende Schutzschicht ist als möglichst dichte und dünne Schicht ausgebildet und unterscheidet sich in ihrer Zusammensetzung von der Zusammensetzung im Inneren des Leuchtstoffkornes bzw. von der mittleren Zusammensetzung. Die Zusammensetzung der Oberfläche lässt sich zum Beispiel mit Oberflächen-sensitiven Methoden wie XPS oder SNMS bestimmen. Die mittlere Zusammensetzung der Leuchtstoffverbindung kann beispielsweise mit Volumensensitiven Methoden wie EDX, RFA oder aber auch mittels chemischer Analyse ermittelt werden.

Vorzugsweise werden solche mit einer Schutzschicht überzogene erste Leuchtstoffverbindungen in der Leuchtstoffschicht der Entladungslampe verwendet.

Die Entladungslampe ist bevorzugterweise als Hg-Niederdruckentladungslampe ausgebildet.

Durch die erfindungsgemäße Leuchtstoffmischung oder einer vorteilhaften Ausgestaltung davon lassen sich allgemein Farbwiedergaben im Bereich von 80 erzielen. Die Lichtausbeute ist vergleichbar heutiger Lichtquellen bei deutlich höheren Farbtemperaturen im Bereich von 2700 K. Für die selbe Lichtausbeute kann mit der erfindungsgemäßen Leuchtstoffmischung eine Farbtemperatur kleiner 2500 K erreicht werden. Mit dieser Lösung kann auch die Energieeffizienzklasse A erreicht werden.

### Kurze Beschreibung der Zeichnungen

Ausführungsbeispiele der Erfindung werden nachfolgend anhand schematischer Zeichnungen näher erläutert. Es zeigen:
- Fig. 1: eine Schnittdarstellung durch ein Ausführungsbeispiel einer erfindungsgemäßen Entladungslampe;
- Fig. 2: ein Emissionsspektrum einer Entladungslampe mit Leuchtstoffmischungen gemäß dem Stand der Technik im Vergleich zu einem Ausführungsbeispiel einer erfindungsgemäßen Leuchtstoffmischung mit einem spezifischen Mischungsverhältnis bezüglich der Gesamtmasse der Leuchtstoffmischung;
- Fig. 3: ein Emissionsspektrum erfindungsgemäßer Leuchtstoffmischungen mit unterschiedlichen Masseverhältnissen zwischen der ersten und der zweiten Leuchtstoffverbindung;
- Fig. 4: Lichtelektrische Werte der Entladungslampe mit einer Leuchtstoffmischung gemäß dem Stand der Technik einerseits und Ausführungsbeispielen erfindungsgemäßer Leuchtstoffmischungen andererseits;
- Fig. 5: ein Diagramm, in dem die Chromazität bzw. die Normfarbwertanteile unterschiedlicher Leuchtstoffmischungen gezeigt sind;
- Fig. 6: ein CIE-Farbdiagramm mit einem Planck'schen Kurvenzug sowie Isotemperaturlinien und Farborten von spezifischen Ausführungen einer erfindungsgemäßen Leuchtstoffmischung;
- Fig. 7: ein Diagramm, in dem die erwartete Effizienz in Abhängigkeit von der Farbwiedergabe dargestellt ist;
- Fig. 8: ein Emissionsspektrum einer spezifischen Ausführung einer erfindungsgemäßen Leuchtstoffmischung nach Anregung bei einer Wellenlänge von 254 nm; und
- Fig. 9: ein Diagramm in dem die Remissionskurve des in Fig. 8 zugrunde gelegten Ausführungsbeispiel der erfindungsgemäßen Leuchtstoffmischung gezeigt ist.

### Bevorzugte Ausführung der Erfindung

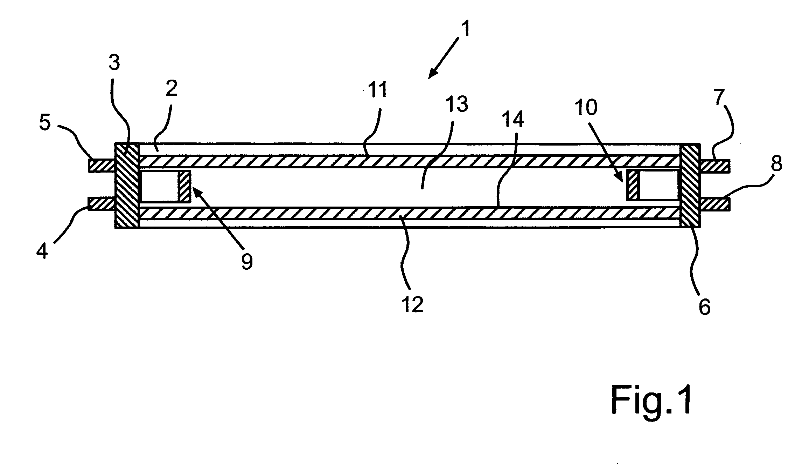

In Fig. 1 ist in einer schematischen Schnittdarstellung eine Entladungslampe 1 gezeigt, welche als Hg-Niederdruckentladungslampe konzipiert ist. Die Entladungslampe 1 ist stabförmig ausgebildet und umfasst ein rohrförmiges Entladungsgefäß 2, welches ein Glaskolben ist. An einem Ende des Entladungsgefäßes 2 ist ein Sockel 3 angebracht, welcher sich nach außen erstreckende elektrische Kontaktierungen 4 und 5 aufweist. An der gegenüberliegenden Seite des Entladungsgefäßes 2 ist ebenfalls ein Sockel 6 angeordnet, an dem sich nach außen erstreckende elektrische Kontaktierungen 7 und 8 befestigt sind. Diese elektrischen Kontaktierungen 7 und 8 sind über Stromzuführungen mit einer Elektrode 10, welche sich in den Entladungsraum 13 des Entladungsgefäßes 2 erstreckt, elektrisch verbunden. In entsprechender Weise sind die elektrischen Kontaktierungen 4 und 5 mit Stromzuführungen verbunden, welche mit einer weiteren Elektrode 9 verbunden sind, wobei sich auch diese Elektrode 9 im Entladungsraum 13 des Entladungsgefäßes 2 erstreckt.

An einer Innenseite 11 des Entladungsgefäßes 2 ist eine Leuchtstoffschicht 12 ausgebildet, welche sich im Ausführungsbeispiel über die gesamte Länge des Entladungsgefäßes 2 erstreckt. Die Leuchtstoffschicht 12 ist im Ausführungsbeispiel unmittelbar an der Innenseite 11 ausgebildet. In der gezeigten Ausführung ist lediglich die Leuchtstoffschicht 12 dargestellt, wobei vorgesehen sein kann, dass auch auf der dem Entladungsraum 13 zugewandten Oberseite 14 und somit der der Innenseite 11 des Entladungsgefäßes 2 abgewandten Oberseite 14 eine weitere Schicht ausgebildet ist. Diese kann beispielsweise eine Schutzschicht insbesondere für die ersten Leuchtstoffverbindungen bzw. Leuchtstoffkörner der Leuchtstoffschicht 12 sein.

Ebenso kann auf dieser Oberseite 14 eine weitere Leuchtstoffschicht ausgebildet sein. Ebenso kann vorgesehen sein, dass zwischen der Leuchtstoffschicht 12 und der Innenseite 11 eine weitere Schicht angeordnet und ausgebildet ist.

Die Leuchtstoffverbindungen sind vorzugsweise mit einer Schutzschicht aus Metalloxiden, einem Borat, einem Phosphat oder einem ternären Material umgeben.

Die Leuchtstoffschicht 12 umfasst eine Leuchtstoffmischung mit einer Mehrzahl von ersten und einer Mehrzahl von zweiten Leuchtstoffverbindungen bzw. Leuchtstoffkörnern. Eine erste Leuchtstoffverbindung weist ein Emissionsspektrum im grünen bis gelben Spektralbereich auf und ist darüber hinaus zur Absorption der von der Hg-Quelle emittierten UV-Strahlung und der von der Hg-Quelle emittierten Strahlung im blauen Spektralbereich ausgebildet. Darüber hinaus ist eine erste Leuchtstoffverbindung zur Konversion der absorbierten UV-Strahlung und der Strahlung im blauen Spektralbereich in ihr Emissionsspektrum ausgebildet. Als Hg-Quelle wird beispielsweise ein Hg-Atom oder ein Hg-Ion, welches sich im Entladungsraum 13 befindet, verstanden. Durch die Emission der Elektronen aus einer Elektrode 9 bzw. 10 werden die Hg-Quellen in dem Entladungsraum 13 angeregt und emittieren UV-Strahlung sowie Strahlung im blauen Spektralbereich.

Die erste Leuchtstoffverbindung ist im Ausführungsbeispiel vorzugsweise SrSiON:Eu, wodurch die Absorption der Hg-Strahlungsanteile und die Konversion dieser Strahlung in sichtbare Strahlung besonders effizient erfolgen kann. Die dominierende Wellenlänge der Leuchtstoffmischung ist größer als 450 nm.

Die Leuchtstoffmischung in der Leuchtstoffschicht 12 weist eine zweite Leuchtstoffverbindung auf, welche ein Emissionsspektrum im roten Spektralbereich aufweist. Insbesondere ist als zweite Leuchtstoffverbindung Y203:Eu vorgesehen, wobei sich durch die Kombination der Leuchtstoffverbindungen Farbtemperaturen kleiner 2500 K mit hoher Effizienz erzielen lassen.

Darüber hinaus können durch die Variation der Massenverhältnisse zwischen den beiden Leuchtstoffverbindungen der Leuchtstoffmischung verschiedene Farbtemperaturen eingestellt werden. Stets beträgt der Masseanteil des Bestandteils SrSiON bezogen auf die Gesamtmasse 100 der Leuchtstoffmischung gleich oder weniger als 50 %.

Eine weitere bevorzugte Ausführung der ersten Leuchtstoffverbindung ist durch Orthosilikat:Eu, nämlich (Ba,Sr,Ca)2SiO4:Eu, gebildet. Die Leuchtstoffkörner bzw. die Leuchtstoffverbindungen der Leuchtstoffmischung können durch eine Schutzschicht überzogen sein, wobei dazu eine möglichst dichte und dünne Schutzschicht ausgebildet ist. Durch ein derartiges Anbringen einer Schutzschicht kann die Stabilität gegenüber der anregenden Strahlung verbessert werden. Darüber hinaus kann auch die Stabilität in Wasser verbessert werden und eine geringere Affinität gegenüber Hg und damit eine geringere Adsorption von Hg während des Lampenbetriebes erreicht werden.

Mit einer derartigen Ausgestaltung der Entladungslampe 1 insbesondere im Hinblick auf die Leuchtstoffmischung kann eine Farbtemperatur kleiner 2500 K auch im Bereich der Juddschen Geraden realisiert werden. Es kann eine allgemeine Farbwiedergabe im Bereich von 80 erzielt werden, wobei die Lichtausbeute vergleichbar heutiger Lichtquellen bei 2700 K ist. Die Energieeffizienzklasse A ist mit der in Fig. 1 gezeigten Entladungslampe 1 erreicht.

Es kann vorgesehen sein, dass die Leuchtstoffschicht 12 unmittelbar an der Innenseite 11 des Entladungsgefäßes 2 angeordnet ist und insbesondere als Leuchtstoffmischung Y203:Eu als zweite Leuchtstoffverbindung und SrSiON:Eu als erste Leuchtstoffverbindung umfasst.

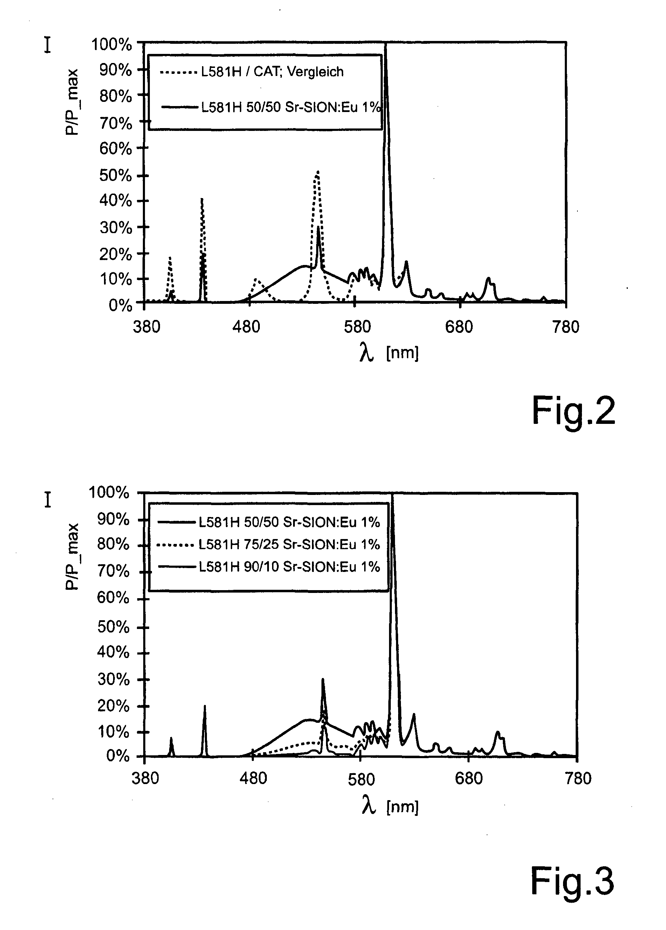

Vorzugsweise ist die erste Leuchtstoffverbindung so ausgebildet, dass sie bei einer Wellenlänge von 254 nm, bei der die Hauptintensität der Hg-Niederdruckentladung abgestrahlt wird, sehr stark absorbiert, bei Wellenlängen kleiner 440 nm stark absorbiert und im Wellenlängenbereich größer 530 nm schwach absorbiert. In Fig. 2 ist ein Diagramm gezeigt, bei dem die prozentuale Emissionsintensität in Abhängigkeit der Wellenlänge λ dargestellt ist. Das in Fig. 2 gezeigte Emissionsspektrum ist von einer Entladungslampe gemäß Fig. 1. Dabei zeigt die gestrichelte Linie ein Emissionsspektrum der Entladungslampe 1, welche gemäß dem Stand der Technik ausgebildet ist und somit eine Leuchtstoffschicht umfasst, welche als Leuchtstoffverbindungen Y2O3:Eu(L581H) und CAT umfasst.

In Fig. 2 ist darüber hinaus durch die durchgezogene Linie ein Emissionsspektrum einer erfindungsgemäßen Entladungslampe 1 gemäß Fig. 1 gezeigt, bei der die Leuchtstoffschicht 12 eine erfindungsgemäße Leuchtstoffmischung aufweist. Im Emissionsspektrum gemäß Fig. 2 ist diese Leuchtstoffmischung aus Y2O3:Eu(L581H) als zweite Leuchtstoffverbindung und SrSiON:Eu als erste Leuchtstoffverbindung aufgebaut. Das Mischungsverhältnis der beiden Leuchtstoffverbindungen in dem genannten spezifischen Ausführungsbeispiel einer erfindungsgemäßen Leuchtstoffmischung beträgt jeweils 50 % (50/50) der Gesamtmasse der Leuchtstoffmischung. Im Ausführungsbeispiel ist die erste Leuchtstoffverbindung mit Eu dotiert, wobei der Massenanteil bzw. Gewichtsanteil von Eu 1 % beträgt. Die Massenanteile 50/50 sind bezogen auf eine Gesamtmasse von 100.

In Fig. 3 ist ein Diagramm gezeigt, bei dem die prozentuale Emissionsintensität I in Abhängigkeit von der Wellenlänge λ dargestellt ist. In dem Diagramm gemäß Fig. 3 sind Emissionsspektren von verschiedenen Ausführungsbeispielen einer erfindungsgemäßen Leuchtstoffmischung mit unterschiedlichen Massenverhältnissen zwischen den beiden Leuchtstoffverbindungen der Leuchtstoffmischungen gezeigt. Wie in dem Diagramm zu erkennen ist, sind Leuchtstoffmischungen mit ihren Emissionsspektren dargestellt, wobei die Masseverteilungen zwischen der zweiten Leuchtstoffverbindung Y203:Eu(L581H) und der ersten Leuchtstoffverbindung SrSiON:Eu 50 % zu 50 % (50/50), 75 % zu 25 % (75/25) sowie 90 % zu 10 % (90/10) umfassen. Die Emissionsspektren der oben genannten drei unterschiedlichen Ausführungen der erfindungsgemäßen Leuchtstoffmischung sind in der genannten Reihenfolge durch die dicke durchgezogene Linie, durch die gestrichelte Linie und durch die dünne durchgezogenen Linie gezeigt.

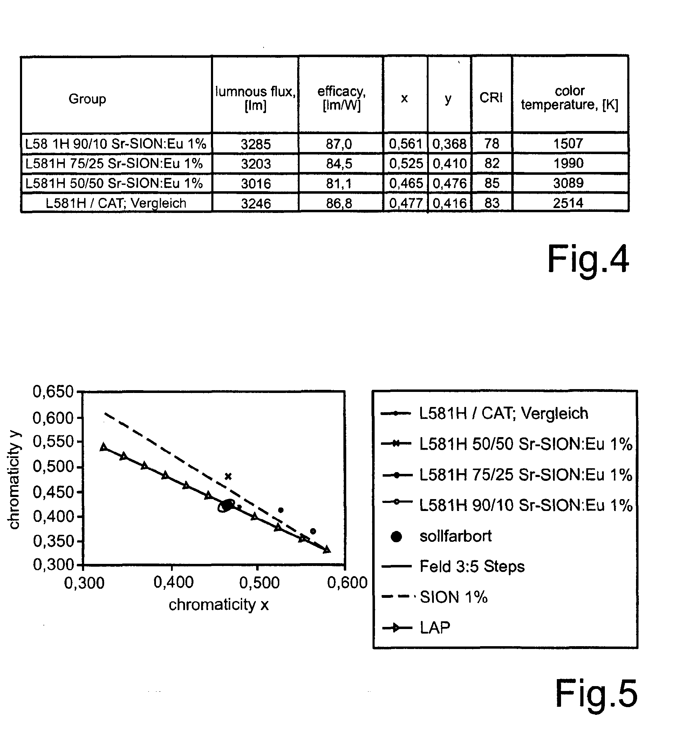

In der Tabelle gemäß Fig. 4 sind die Lichtelektrischen Werte für eine als T8L36W Stablampe ausgebildete Entladungslampe 1 gemäß Fig. 1 gezeigt. Dazu sind gemäß den ersten drei Zeilen Lichtelektrische Werte für diese Entladungslampe 1 gezeigt, wenn die Leuchtstoffschicht 12 jeweils die unterschiedlichen Ausführungen der erfindungsgemäßen Leuchtstoffmischung umfasst. In der letzten vierten Zeile der Tabelle gemäß Fig. 4 ist im Vergleich dazu eine Angabe der Lichtelektrischen Werte angefügt, wenn diese genannte Entladungslampe 1 mit einem aus dem Stand der Technik bekannten Leuchtstoff in der Leuchtstoffschicht ausgebildet ist.

In Fig. 5 ist ein Diagramm gezeigt, bei dem die Chromazität xy bzw. die Normfarbwertanteile unterschiedlicher Leuchtstoffmischungen gemäß verschiedener Ausführungen der erfindungsgemäßen Leuchtstoffmischung einerseits und aus dem Stand der Technik bekannter Leuchtstoffmischungen andererseits dargestellt ist. In dem Diagramm sind mit einer Zweikomponentenmischung durch Superposition erwartete Farborte (durchgezogenen Linien) dargestellt. Die Absorption und Strahlungskonversion der Hg-Strahlung mit einer Wellenlänge kleiner 450 nm durch die den Bestandteil SrSiON aufweisende erste Leuchtstoffverbindung der Leuchtstoffmischung ist in diesem Diagramm nicht berücksichtigt. Die experimentell an einer T8L36W Stablampe ermittelten Farborte mit den unterschiedlichen Leuchtstoffmischungen sind in dem Diagramm gezeigt. Deutlich ist die durch die Absorption der bläulichen Hg-Vis-Strahlung erzielte Farbortverschiebung zu höheren x-Werten zu erkennen. Damit werden geringere Farbtemperaturen erzielt.

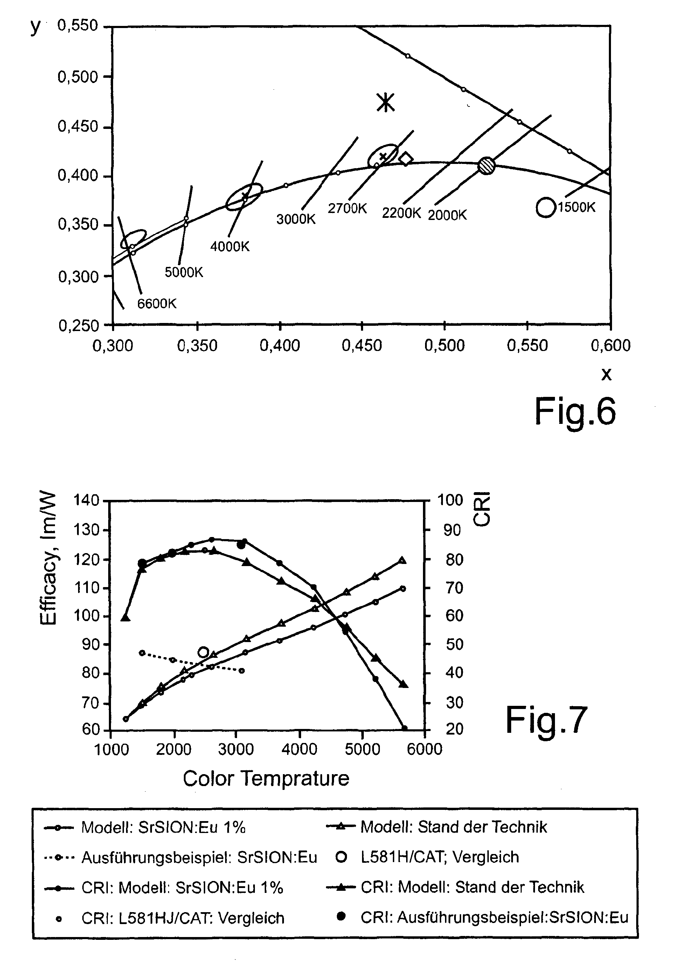

In Fig. 6 ist ein CIE 1931 xy-Farbdiagramm mit Planck'schem Kurvenzug sowie Isotemperaturlinien dargestellt. Eingezeichnet sind Farborte von SrSiON und YOE-Leuchtstoffmischungen aus dem Diagramm gemäß Fig. 5. Farbtemperaturen kleiner 2500 K lassen sich im Bereich der Juddschen Geraden erzielen. Der Stand der Technik ist als Raute bei der Farbtemperatur 2514 K dargestellt.

In Fig. 7 ist ein Diagramm gezeigt, bei dem die erwartete Effizienz in Abhängigkeit von der Farbtemperatur von unterschiedlichen Leuchtstoffmischungen gezeigt ist. In dem Diagramm sind mit einer Zweikomponentenmischung durch Superposition erwartete Effizienzen und allgemeine Farbwiedergaben (durchgezogenen Linien) gezeigt. Die Strahlungskonversion durch den Bestandteil SrSiON der ersten Leuchtstoffverbindung der Hg-Strahlung zwischen einer Wellenlänge von 300 nm und kleiner 450 nm ist hier nicht berücksichtigt.

Es sind an einer T8L36W Stablampe experimentell bestimmte Effizienz und Farbwiedergaben gemäß Leuchtstoffmischungen aus dem Stand der Technik (CAT/L581H) und Ausführungsbeispielen erfindungsgemäßer Leuchtstoffmischungen (SrSi-ON/L581H) eingetragen. Für die aus dem Stand der Technik bekannte Leuchtstoffmischung (CAT/L581H) wird eine Übereinstimmung von Effizienz und Farbwiedergabe gefunden. Dies ist durch den dunklen Punkt im Diagramm einer Effizienz von etwa 87 und einer Farbtemperatur von etwa 2600 K gezeigt. Für SrSiON zeigt sich mit abnehmender Farbtemperatur eine Zunahme der Effizienz, die durch erfolgreiche Strahlungskonversion der Hg-Strahlung im Bereich zwischen der Wellenlänge 300 nm und 450 nm erzielt werden kann. Die Farbwiedergabe liegt dabei im für die Allgemeinbeleuchtung Anwendungsrelevanten Bereich von 80 und wird durch die Berechnungen korrekt wiedergegeben. Gegenüber dem Stand der Technik ergibt sich damit der Vorteil einer höheren Effizienz im Bereich geringerer Farbtemperaturen.

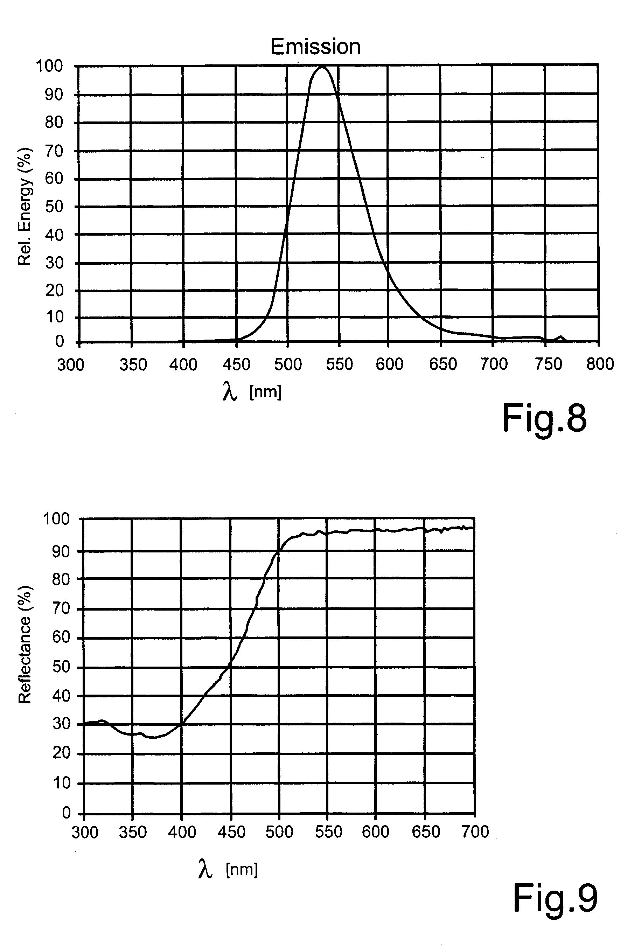

In Fig. 8 ist ein Diagramm gezeigt, bei dem die relative Energie in Prozent in Abhängigkeit von der Wellenlänge λ der ersten Leuchtstoffverbindung SrSiON:Eu(1%) einer erfindungsgemäßen Leuchtstoffmischung nach einer Anregung einer Hg-Strahlung mit einer Wellenlänge von 254 nm gezeigt ist. Die Leuchtstoffmischung beträgt hierbei 50 % zu 50 % zwischen der ersten und der zweiten Leuchtstoffverbindung.

In Fig. 9 ist ein Diagramm gezeigt, bei dem die Emissionskurve der als SrSiON:Eu(1%) ausgebildeten ersten Leuchtstoffverbindung in Abhängigkeit von der Wellenlänge gezeigt ist. Auch hier ist ein Massenverhältnis von 50 % zu 50 % zwischen der ersten und der zweiten Leuchtstoffverbindung der Leuchtstoffmischung zugrunde gelegt.

In der vereinfachten Darstellung einer Entladungslampe 1 gemäß Fig. 1 ist die Leuchtstoffschicht 12 unmittelbar an der Innenseite 11 des Entladungsgefäßes 2 angebracht. Weitere Leuchtstoffschichten oder zusätzliche anderweitige Schichten wie beispielsweise Schutzschichten oder dergleichen, sind in der Skizze nicht gezeigt.

Es kann jedoch auch vorgesehen sein, dass das Entladungsgefäß 2 zumindest eine zusätzliche weitere Beschichtung aufweist. Dabei kann vorgesehen sein, dass zwischen der Innenseite 11 des Entladungsgefäßes 2. und der ersten Leuchtstoffschicht 12 mindestens eine zusätzliche Beschichtung ausgebildet ist. Bevorzugt ist diese dazwischen liegende Schicht als Schutzschicht gegenüber einer Hg-Diffusion in das Glas des Entladungsgefäßes 2 ausgebildet.

Zusätzlich oder anstatt dazu kann vorgesehen sein, dass zumindest zwei erste Leuchtstoffschichten 12 an dem Entladungsgefäß 2 ausgebildet sind.

Es kann auch vorgesehen sein, dass ausgehend von der Darstellung gemäß Fig. 1 eine weitere Schicht auf der Oberseite 14 der ersten Leuchtstoffschicht 12 ausgebildet ist. Diese dem Entladungsraum 13 zugewandte weitere Schicht kann ebenfalls eine Schutzschicht sein, welche zum Schutz der Leuchtstoffverbindungen der ersten Leuchtstoffschicht 12 vor Strahlungsschädigung im VUV-Spektralbereich oder vor Reaktion mit Hg-Ionen schützt. Eine entsprechende Beschichtung kann auch direkt auf die einzelnen Leuchtstoffverbindungen bzw. Leuchtstoffkörner der Leuchtstoffmischung der ersten Leuchtstoffschicht 12 aufgebracht sein. Beispielsweise kann eine derartige Strahlungsschädigungs-Schutzschicht und/oder Reaktionsverhinderungs-Schutzschicht als A1203- oder Y203-Schutzschicht ausgebildet sein.

Zusätzlich oder anstatt dazu kann vorgesehen sein, dass an dem Entladungsgefäß 2 zumindest eine erste Leuchtstoffschicht 12 mit einer erfindungsgemäßen Leuchtstoffmischung ausgebildet ist, wobei zwischen dem Entladungsraum 13 und dieser ersten Leuchtstoffschicht 12 eine zusätzliche zweite Leuchtstoffschicht (nicht dargestellt) angebracht sein kann, welche als Bestandteil Tb (Terbium) aufweist. Insbesondere ist die erste Leuchtstoffschicht mit einer erfindungsgemäßen Leuchtstoffmischung ohne Tb ausgebildet. Die zweite Leuchtstoffschicht kann beispielsweise eine Leuchtstoffmischung aus den Leuchtstoffverbindungen CAT und YOE aufweisen.

Alle erläuterten Ausführungsbeispiele können auch in beliebiger Weise miteinander kombiniert werden, so dass sich unterschiedlichste Schichtenbildungen und Ausgestaltungen der einzelnen Leuchtstoffschichten und Schutzschichten ergeben können.

## Patentansprüche

1. Leuchtstoffmischung für eine Entladungslampe (1), welche eine erste und eine zweite Leuchtstoffverbindung aufweist, wobei:
- die erste Leuchtstoffverbindung ein Emissionsspektrum im grünen und/oder gelben Spektralbereich aufweist, zur Absorption der von einer Hg-Quelle emittierten UV-Strahlung und der von der Hg-Quelle emittierten Strahlung im blauen Spektralbereich ausgebildet ist und als Bestandteil (Sr_{1-x-y}BaₓCa_{y})Si₂O₂N₂:Eu (SrSiON) oder (Ba,Sr,Ca)₂SiO₄:Eu aufweist, und
- die zweite Leuchstoffverbindung ein Emissionsspektrum im roten Spektralbereich und als Bestandteil Y₂O₃:Eu aufweist,
**dadurch gekennzeichnet, dass**
der Massenanteil der ersten Leuchtstoffverbindung kleiner oder gleich 50% ist, die dominierende Wellenlänge des Emissionsspektrums der gesamten Leuchtstoffmischung größer 575 nm ist und die Farbtemperatur der Leuchtstoffmischung kleiner 2500 K ist.

2. Leuchtstoffmischung nach Anspruch 1,
**dadurch gekennzeichnet, dass**
die dominierende Wellenlänge des Emissionsspektrums der gesamten Leuchtstoffmischung für Farbtemperaturen kleiner 2000 K größer 585 nm, für Farbtemperaturen kleiner 1750 K größer als 590 nm und für Farbtemperaturen kleiner als 1250 K größer 600 nm ist.

3. Leuchtstoffmischung nach einem der vorhergehenden Ansprüche,
**dadurch gekennzeichnet, dass**
die erste Leuchtstoffverbindung für Strahlung mit Wellenlängen kleiner 440 nm eine starke Absorption aufweist, insbesondere für Strahlung mit einer Wellenlänge von etwa 254 nm eine sehr starke Absorption, und für Strahlung mit einer Wellenlänge größer 530 nm eine schwache Absorption.

4. Leuchtstoffmischung nach einem der vorhergehenden Ansprüche,
**dadurch gekennzeichnet, dass**
das Emissionsspektrum der ersten Leuchtstoffverbindung eine dominierende Wellenlänge zwischen 530 nm und 570 nm aufweist.

5. Leuchtstoffmischung nach einem der vorhergehenden Ansprüche,
**dadurch gekennzeichnet, dass**
zumindest die erste Leuchtstoffverbindung mit Eu dotiert ist, wobei der Massenanteil der Dotierung mit Eu insbesondere zwischen 0,1% und 15% und besonders bevorzugt zwischen 1% und 2% beträgt.

6. Entladungslampe mit einem Entladungsgefäß (2), an dem eine Leuchtstoffschicht (12) ausgebildet ist,
**dadurch gekennzeichnet, dass**
zumindest eine erste Leuchtstoffschicht (12) ausgebildet ist, welche eine Leuchtstoffmischung nach einem der vorhergehenden Ansprüche aufweist.

7. Entladungslampe nach Anspruch 6,
**dadurch gekennzeichnet, dass**
die erste Leuchtstoffschicht (12) an der Innenseite (11) des Entladungsgefäßes (2) unmittelbar ausgebildet ist.

8. Entladungslampe nach Anspruch 6,
**dadurch gekennzeichnet, dass**
zwischen der ersten Leuchtstoffschicht (12) und der Innenseite (11) des Entladungsgefäßes (2) zumindest eine Hg-Diffusions-Schutzschicht ausgebildet ist.

9. Entladungslampe nach einem der Ansprüche 6 bis 8,
**dadurch gekennzeichnet, dass**
auf der der Innenseite (11) des Entladungsgefäßes (2) abgewandten Oberseite (14) der ersten Leuchtstoffschicht (12) eine Schutzschicht zum Schutz der ersten Leuchtstoffverbindung vor VUV-Strahlung und/oder einer Reaktion mit Hg-Ionen ausgebildet ist, die insbesondere Al₂O₃ und/oder Y₂O₃ als Bestandteil aufweist.

10. Entladungslampe nach einem der Ansprüche 6 bis 9,
**dadurch gekennzeichnet, dass**
auf der der Innenseite (11) des Entladungsgefäßes (2) abgewandten Oberseite (14) der ersten Leuchtstoffschicht (12) eine zweite Leuchtstoffschicht ausgebildet ist, welche Tb und insbesondere eine (Ce,Tb)MgAl₁₁O₁₉ (CAT)-Y₂O₃:Eu (YOE)-Mischung als Leuchtstoffverbindungen aufweist.

11. Entladungslampe nach einem der Ansprüche 6 bis 10,
**dadurch gekennzeichnet, dass**
die ersten Leuchtstoffverbindungen der ersten Leuchtstoffschicht (12) von einer Schutzschicht umgeben sind, die insbesondere Metalloxide und/oder Borate und/oder Phosphate und/oder Fluoride und/oder SiO₂ aufweist.

## Claims

1. Phosphor mixture for a discharge lamp (1), which comprises a first phosphor compound and a second phosphor compound,
wherein
- the first phosphor compound has an emission spectrum in the green and/or yellow spectral range, is disposed to absorb the UV radiation emitted by an Hg source and the radiation in the blue spectral range emitted by the Hg source and comprises (Sr_{1-x-y}BaₓCa_{y})Si₂O₂N₂:Eu (SrSiON) or (Ba, Sr, Ca)₂SiO₄:Eu as a constituent, and
- the second phosphor compound has an emission spectrum in the red spectral range and comprises Y₂O₃:Eu as a constituent,
**characterized in that**
the mass fraction of the first phosphor compound is less than or equal to 50%, the dominant wavelength of the emission spectrum of the overall phosphor mixture is more than 575 nm and the colour temperature of the phosphor mixture is less than 2500 K.

2. Phosphor mixture according to Claim 1,
**characterized in that**
the dominant wavelength of the emission spectrum of the overall phosphor mixture is more than 585 nm for colour temperatures of less than 2000 K, more than 590 nm for colour temperatures of less than 1750 K and more than 600 nm for colour temperatures of less than 1250 K.

3. Phosphor mixture according to one of the preceding claims, **characterized in that** the first phosphor compound has strong absorption for radiation with wavelengths of less than 440 nm, in particular very strong absorption for radiation with a wavelength of about 254 nm, and weak absorption for radiation with a wavelength of more than 530 nm.

4. Phosphor mixture according to one of the preceding claims, **characterized in that** the emission spectrum of the first phosphor compound has a dominant wavelength of between 530 nm and 570 nm.

5. Phosphor mixture according to one of the preceding claims, **characterized in that** at least the first phosphor compound is doped with Eu, wherein the mass fraction of the Eu doping lies in particular between 0.1% and 15% and particularly preferably between 1% and 2%.

6. Discharge lamp having a discharge vessel (2) on which a phosphor layer (12) is formed, **characterized in that** at least a first phosphor layer (12) is formed which comprises a phosphor mixture according to one of the preceding claims.

7. Discharge lamp according to Claim 6, **characterized in that** the first phosphor layer (12) is formed directly on the inner side (11) of the discharge vessel (2).

8. Discharge lamp according to Claim 6, **characterized in that** at least one Hg diffusion protection layer is formed between the first phosphor layer (12) and the inner side (11) of the discharge vessel (2).

9. Discharge lamp according to one of Claims 6 to 8, **characterized in that** a protective layer for protecting the first phosphor compound against VUV radiation and/or a reaction with Hg ions is formed on the upper side (14) of the first phosphor layer (12) facing away from the inner side (11) of the discharge vessel (2), which protective layer in particular comprises Al₂O₃ and/or Y₂O₃ as a constituent.

10. Discharge lamp according to one of Claims 6 to 9, **characterized in that** a second phosphor layer, which comprises Tb and in particular a (Ce,Tb)MgAl₁₁O₁₉ (CAT) -Y₂O₃:EU (YOE) mixture as phosphor compounds, is formed on the upper side (14) of the first phosphor layer (12) facing away from the inner side (11) of the discharge vessel (2).

11. Discharge lamp according to one of Claims 6 to 10, **characterized in that** the first phosphor compounds of the first phosphor layer (12) are enclosed by a protective layer which in particular comprises metal oxides and/or borates and/or phosphates and/or fluorides and/or SiO₂.

## Revendications

1. Mélange luminescent pour une lampe à décharge (1), comprenant un premier et un second composé luminescent,
- le premier composé luminescent présentant un spectre d'émission se situant dans le domaine spectral du jaune et/ou du vert, étant conçu pour absorber le rayonnement UV émis par une source Hg et le rayonnement dans le domaine spectral du bleu émis par la source Hg, et présentant du (Sr_{1-x-y}BaₓCa_{y}) Si₂O₂N₂:Eu (SrSiON) ou du (Ba,Sr,Ca)₂SiO₄:Eu à titre de constituant, et
- le second composé luminescent présentant un spectre d'émission se situant dans le domaine spectral du rouge, et du Y₂O₃:Eu à titre de constituant,
**caractérisé en ce que**
le pourcentage en masse du premier composé luminescent est inférieur ou égale à 50%, la longueur d'onde dominante du spectre d'émission de l'ensemble du mélange luminescent est supérieure à 575 nm et la température de couleur du mélange luminescent est inférieure à 2500 K.

2. Mélange luminescent selon la revendication 1,
**caractérisé en ce que**
la longueur d'onde dominante du spectre d'émission de l'ensemble du mélange luminescent est supérieure à 585 nm pour des températures de couleur inférieures à 2000 K, supérieure à 590 nm pour des températures de couleur inférieures à 1750 K et supérieure à 600 nm pour des températures de couleur inférieures à 1250 K.

3. Mélange luminescent selon l'une des revendications précédentes,
**caractérisé en ce que**
le premier composé luminescent présente une forte absorption pour un rayonnement dont les longueurs d'onde sont inférieures à 440 nm, en particulier une très forte absorption pour un rayonnement d'une longueur d'onde d'environ 254 nm, et une faible absorption pour un rayonnement d'une longueur d'onde supérieure à 530 nm.

4. Mélange luminescent selon l'une des revendications précédentes,
**caractérisé en ce que**
le spectre d'émission du premier composé luminescent présente une longueur d'onde dominante entre 530 nm et 570 nm.

5. Mélange luminescent selon l'une des revendications précédentes,
**caractérisé en ce que**
au moins le premier composé luminescent est dopé avec du Eu, le pourcentage en masse du dopage avec Eu étant compris en particulier entre 0,1% et 15% et de manière particulièrement préférée entre 1% et 2%.

6. Lampe à décharge comprenant un récipient de décharge (2) sur lequel est réalisée une couche luminescente (12),
**caractérisée en ce que**
au moins une première couche luminescente (12) est réalisée, laquelle présente un mélange luminescent selon l'une des revendications précédentes,

7. Lampe à décharge selon la revendication 6,
**caractérisée en ce que**
la première couche luminescente (12) est réalisée directement sur le côté intérieur (11) du récipient de décharge (2).

8. Lampe à décharge selon la revendication 6,
**caractérisée en ce que**
au moins une couche anti-diffusion de Hg est réalisée entre la première couche luminescente (12) et le côté intérieur (11) du récipient de décharge (2).

9. Lampe à décharge selon l'une des revendications 6 à 8,
**caractérisée en ce que**
une couche de protection destinée à protéger le premier composé luminescent contre le rayonnement VUV et/ou contre une réaction avec des ions Hg est réalisée sur le côté supérieur (14) de la première couche luminescente (12), opposé au côté intérieur (11) du récipient de décharge (2), laquelle présente en particulier du Al₂O₃ et/ou du Y₂O₃ à titre de constituant.

10. Lampe à décharge selon l'une des revendications 6 à 9,
**caractérisée en ce que**
une seconde couche de protection est réalisée sur le côté supérieur (14) de la première couche luminescente (12), opposé au côté intérieur (11) du récipient de décharge (2), laquelle présente du Tb et en particulier un mélange de (Ce, Tb)MgAl₁₁O₁₉ (CAT) et de Y₂O₃:Eu (YOE) à titre de composés luminescents.

11. Lampe à décharge selon l'une des revendications 6 à 10,
**caractérisée en ce que**
les premiers composés luminescents de la première couche luminescente (12) sont entourés d'une couche de protection qui présente en particulier des oxydes métalliques et/ou des borates et/ou des phosphates et/ou des fluorures et/ou du SiO₂.
